Europäisches Patentamt

European Patent Office

Office européen des brevets

(19)

(11) Veröffentlichungsnummer: **0 302 356 B1**

# EUROPÄISCHE PATENTSCHRIFT

(12)

(45) Veröffentlichungstag der Patentschrift:
20.03.91 Patentblatt 91/12

(51) Int. Cl.$^5$: **B65G 69/24**

(21) Anmeldenummer: **88111994.5**

(22) Anmeldetag: **26.07.88**

(54) Überladebrücke für Rampen.

(30) Priorität: **06.08.87 DE 3726097**

(43) Veröffentlichungstag der Anmeldung:
**08.02.89 Patentblatt 89/06**

(45) Bekanntmachung des Hinweises auf die Patenterteilung:
**20.03.91 Patentblatt 91/12**

(84) Benannte Vertragsstaaten:
**AT BE CH DE ES FR GB GR IT LI LU NL SE**

(56) Entgegenhaltungen:
**DE-A- 2 735 826**

(73) Patentinhaber: **Alten, Kurt
Ringstrasse 14
W-3015 Wennigsen (DE)**

(72) Erfinder: **Alten, Kurt
Ringstrasse 14
W-3015 Wennigsen (DE)**

(74) Vertreter: **Depmeyer, Lothar
Auf der Höchte 30
W-3008 Garbsen 1 (DE)**

## Beschreibung

Die Erfindung geht aus von einer Überladebrücke für Rampen nach dem Gattungsbegriff des 1. Patentanspruchs.

Bei bekannten Überladebrücken erfolgt die Rückführung der Brücke in die Ruhestellung durch einen Schalter, der von der Bedienungsperson betätigt werden muss. Es liegt also im Belieben der Bedienungsperson, die Brücke in ihre Ruhestellung zurückzuführen, bei der die Verlängerung eingefahren und die Brückenplatte in die Rampenebene zurückgeführt ist. Da ein ordnungsgemässer Rampenbetrieb nur dann durchführbar ist, wenn die Überladebrücke ihre Ruhestellung eingenommen hat, besteht der Wunsch, diesen Betriebszustand im Anschluss an den Ladebetrieb möglichst schnell wieder herzustellen.

Der Erfindung liegt die Aufgabe zugrunde, die Rückführung der Brücke in ihre Ruhestellung im Anschluss an einen Ladebetrieb unabhängig von der Bedienungsperson möglichst schnell herbeizuführen.

Zur Lösung dieser Aufgabe ist erfindungsgemäss die Steuerung durch einen für das Fahrzeug vorgesehenen Radkeil mit zeitlicher Verzögerung einschaltbar.

Demgemäss ist die Rückführung der Brücke in ihre Ruhestellung unabhängig von der Bedienungsperson, sie erfolgt vielmehr durch einen Radkeil, der mittels eines daran befestigten Schalters die Steuerung für die Rückführung in Tätigkeit setzt, wenn das Fahrzeug den Radkeil verlässt. In Verfolgung dieses Erfindungsgedankens wird der Radkeil auch noch mit einem weiteren Schalter ausgerüstet, der als Hauptschalter für die Brücke dient, diese also erst zum Betrieb freigibt. Der Radkeil setzt also die Brücke in Betrieb bzw. ermöglicht den Brückenbetrieb, und dieser kann also nicht in Vergessenheit geraten, um die erfindungsgemässe Rückführung in die Ruhelage bewerkstelligen zu können. Um die Brücke in Betrieb nehmen zu können, muss also erst der Radkeil an ein Rad des Fahrzeuges angesetzt werden.

Die vorerwähnten Massnahmen eröffnen auch die Möglichkeit, die vorerwähnten Schalter zur Bestimmung der Betriebszeit der Brücke und somit zur Feststellung des Ladebetriebes zu benutzen. Demgemäss kann dem Radkeil auch ein Zeitmessgerät zugeordnet werden, das die Betriebszeit anzeigen bzw. registrieren kann. Diese Prüfmöglichkeit kann z.B. für Speditionen von Bedeutung sein.

Weitere Einzelheiten der in den Ansprüchen definierten Erfindung werden anhand der Zeichnung erläutert, in der ein Ausführungsbeispiel der Erfindung dargestellt ist.

Es zeigen :

Fig. 1 eine Überladebrücke für Rampen im Längsschnitt, und zwar im Betrieb unter Andeutung der Ruhestellung der Brücke, und

Fig. 2 einen Radkeil für die Brücke gemäss Fig. 1 im senkrechten Schnitt.

Die als Kastenträger ausgebildete Brückenplatte 1 ist an ihrem rampenseitigen Ende um eine quer verlaufende Achse 2 an der Rampe 3 verschwenkbar gelagert, deren zur Aufnahme der Brücke dienende Ausnehmung mit 4, deren vordere kante mit 5 und deren Wirkebene mit 6 bezeichnet sind. Vorne an der Brückenplatte 1 befindet sich eine mittels Schlitten 7 in Brückenlängsrichtung hin- und herbewegbare Verlängerung 8, die durch einen Zylinder 9 bewegbar ist und zur Abstützung der Brückenplatte 1 auf der zu be- bzw. entladenden Plattform 10 eines Fahrzeuges dient, wenn sich die Brücke in Betrieb befindet und so eine Folgebewegung der Brückenplatte 1 in Bezug auf eine sich verändernde Höhe der Plattform 10 eintreten kann. Damit diese Wirkung immer eintreten kann, ist die Brückenplatte 1 geringfügig kopflastig eingestellt. Zum Anheben der Brückenplatte 1 dient ein Hubwerk mit einem Arbeitszylinder 11 ; das zugehörige Hydraulikaggregat ist mit 12 bezeichnet, von dem aus Leitungen 13 zum Zylinder 9 und Leitungen 14 zum Arbeitszylinder 11 führen. Das Hydraulikaggregat 12 wird von einer Steuerung 15 beeinflusst, die in Reichweite der Bedienungsperson mit einer nicht näher dargestellten Schalttafel versehen ist, mit die die Bedienungsperson die Brückenplatte 1 heben und senken und die Verlängerung 8 ein- und ausfahren lassen kann.

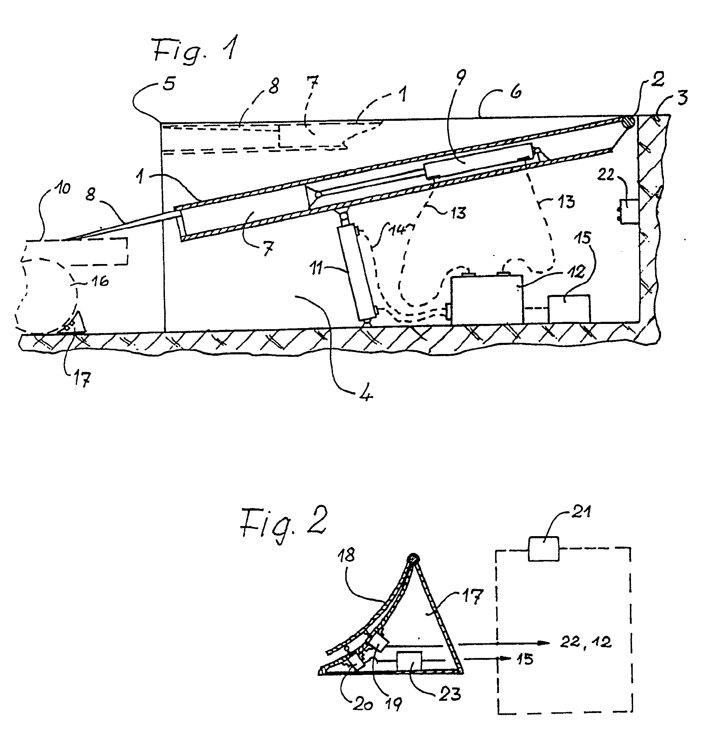

Die Steuerung 15 weist zudem nach bekannten Vorschlägen und bekannten Mitteln eine Einrichtung auf, mit der die Brücke in die Ruhelage geführt werden kann. Diese Einrichtung führt also die ausgefahrene Verlängerung 8 in die gestrichelte Lage gemäss Fig. 1 zurück, ebenso die Brückenplatte 1 durch Anheben bzw. Absenken in eine Stellung, in der sie mit ihrer Oberfläche mit der Wirkebene 6 auf einer Höhe liegt.

Das Rad 16 des die Plattform 10 aufweisenden Fahrzeuges liegt zudem an einem Radkeil 17 an. Dieser in Fig. 2 näher dargestellte Keil hat eine an der oben liegenden Spitze des Radkeils 17 angelenkte Kontaktplatte 18 für das Rad 16, zudem noch zwei Schalter 19, 20. Der Schalter 19 steht dabei so mit der Brückenanlage in Verbindung, dass er die elektrische Anlage in Form eines Hauptschalters unter Spannung setzen kann, um damit überhaupt erst einen Brückenbetrieb zu ermöglichen. Insb. schaltet er den elektrischen Antriebsmotor des Hydraulikaggregates 12 in der Weise, dass dann Schaltungen durch die Steuerung 15 möglich sind. Der Schalter 20 hat hingegen die Aufgabe, die vorgenannte Einrichtung zur Rückführung der Brücke in die Ruhelage einzuschalten, und zwar im Anschluss an einen Ladebetrieb, wenn die Kontaktplatte 18 nicht mehr von einem Rad 16 eingeschwenkt ist. Dieses Schalten durch den Schalter 20 erfolgt aber nur über die Wirkung eines Zeitgliedes 23, das den Schaltbefehl des Schalters 20 erst dann wirksam werden lässt, wenn das Fahrzeug z.B. für mehrere Sekunden abgezogen ist. Hierdurch sollen ungewollte Schaltungen ausgemerzt und etwaige Beschädigungen des Fahrzeuges ausgeschaltet werden.

Da im Regelfalle der Schalter 19 bei Beginn des Brückenbetriebes betätigt und der Schalter 20 bei Beendigung des ladebetriebes zur Wirkung kommt, wird die Betätigung dieser Schalter zur Zeitmessung ausgenutzt. Z. B. kann mit dem Schalten des Schalters 19 der Zeitmesser eingeschaltet und mit der Betätigung des Schalters 20 der Zeitmesser ausgeschaltet bzw. abgeschaltet werden. Das Ergebnis der Zeitmessung kann angezeigt und/oder gespeichert werden. Es gibt Aufschlüsse über die Dauer der Lademanipulationen, z.B. über deren Effektivität in Bezug auf das verladene Gut. Der Zeitmesser ist bei 21 angedeutet, der Hauptstromanschluss der Überladebrücke bei 22 dargestellt.

Von besonderer Wichtigkeit ist natürlich, dass die Schaltbewegung des Schalters 20 automatisch, also ohne Zutun des Bedienungspersonals erfolgt. Es wird damit gewährleistet, dass die Brücke recht kurz nach dem Abziehen des Fahrzeugs in die Ruhelage zurückgeführt wird, damit dann der Rampenbetrieb wieder ungestört vollzogen, also nicht durch eine nach oben oder nach unten verschwenkte Brückenplatte 1 gestört werden kann.

Es versteht sich, dass die beiden Schalter 19, 20 so ausgeführt sein müssen, dass der Schalter 19 im eingedrückten Zustand einschaltet, während der Schalter 20 im nicht eingedrückten Zustand effektiv sein muss (bei abgezogenem Fahrzeug gemäss Fig. 2). Zudem werden die elektrischen Zuleitungen zum Radkeil 17 als fliegende Leitungen ausgeführt, um den Radkeil 17 ortsveränderbar zu machen.

## Ansprüche

1. Überladebrücke für Rampen mit einer an ihrem rampenseitigen Ende um eine waagerechte Achse verschwenkbar gelagerten Brückenplatte (1) und einer am freien Ende der Brückenplatte (1) befindlichen, ein- und ausfahrbaren Verlängerung (8) zur Abstützung auf der zu be- bzw. entladenden Plattform (10), wobei die Brücke eine ihre Rückführung in die Ruhestellung bewirkende Steuerung (15) aufweist, dadurch gekennzeichnet, dass die Steuerung (15) durch einen für das der Plattform (10) zugeordnete Fahrzeug bestimmten Radkeil (17) mit zeitlicher Verzögerung einschaltbar ist.

2. Brücke nach Anspruch 1, dadurch gekennzeichnet, dass der Radkeil (17) mit einem elektrischen Schalter (19) versehen ist, mit dem im Wirkzustand des Radkeiles die elektrische Anlage der Brücke eingeschaltet und in der Ruhestellung des Radkeiles die elektrische Anlage abgeschaltet ist.

3. Brücke nach Anspruch 1 und 2, dadurch gekennzeichnet, dass die Schalter (19, 20) für das Rückführen der Brücke in ihre Ruhestellung und das Einschalten der elektrischen Anlage zum Ein-und Ausschalten eines Zeitmessers zur Feststellung der Betriebszeit der Brücke dienen.

4. Brücke nach Anspruch 1, dadurch gekennzeichnet, dass der Radkeil (17) mit einer durch das Rad (16) des Fahrzeuges betätigbaren Kontaktplatte (18) versehen ist, die auch zum Ein- und Ausschalten eines Zeitmessers für die Ermittlung der Betriebszeit der Brücke dienen kann.

## Claims

1. Ramp bridging device, comprising a bridge plate (1), which is mounted at its ramp end so as to be pivotable about a horizontal axis, and a retractable and extendable extension portion (8), which is situated at the free end of the bridge plate (1) for support on the platform (10) to be loaded or unloaded, the bridging device having a control means (15), which causes said bridging device to return into its inoperative position, characterised in that the control means (15) can be switched-on, with a time delay, by a wheel chock (17), which is intended for the vehicle associated with the platform (10).

2. Bridging device according to claim 1, characterised in that the wheel chock (17) is provided with an electric switch (19), by means of which the electrical system of the bridging device is switched-on when the wheel chock is in its operative position, and the electrical system is switched-off when the wheel chock is in its inoperative position.

3. Bridging device according to claims 1 and 2, characterised in that the switches (19, 20) serve to return the bridging device into its inoperative position and to switch-on the electrical system for switching-on and -off a chronometer for determining the operating time of the bridging device.

4. Bridging device according to claim 1, characterised in that the wheel chock (17) is provided with a contact plate (18), which is actuatable by means of the wheel (16) of the vehicle and may also serve to switch-on and -off a chronometer for determining the operating time of the bridging device.

## Revendications

1. Pont de transbordement pour des quais, comprenant un tablier de pont (1) monté basculant autour d'un axe horizontal, à son extrémité côté quai, et un prolongement (8) se trouvant à l'extrémité libre du tablier de pont (1), pouvant être escamoté et déployé, et destiné à s'appuyer sur la plate-forme (10) à charger et à décharger, le pont comportant un dispositif de commande (15) provoquant un retour à la position de repos, caractérisé en ce que le dispositif de commande (15) peut être branché, avec retard dans le temps, par une cale de roue (17) destinée au véhicule associé à la plate-forme (10).

2. Pont suivant la revendication 1, caractérisé en ce que la cale de roue (17) est munie d'un interrupteur (19) par lequel, lorsque la cale de roue est en fonctionnement, l'installation électrique du pont est mise sous tension et, lorsque la cale de roue est dans la position de repos, est mise hors tension.

3. Pont suivant la revendication 1 ou 2, caractérisé en ce que les interrupteurs (19, 20) pour ramener le pont en sa position de repos et la mise sous tension de l'installation électrique servent à brancher et à débrancher un chronomètre destiné à déterminer la durée de fonctionnement du pont.

4. Pont suivant la revendication 1, caractérisé en ce que la cale de roue (17) est munie d'une platine de contact (18), qui peut être manoeuvrée par la roue (16) du véhicule et qui peut servir également à brancher et à débrancher un chronomètre destiné à déterminer la durée de fonctionnement.

Fig. 1

Fig. 2